# EUROPÄISCHE PATENTSCHRIFT

(11) **EP 1 901 640 B1**
(45) Veröffentlichungstag und Bekanntmachung des Hinweises auf die Patenterteilung: **22.07.2009**
(21) Anmeldenummer: 06777400.0
(22) Anmeldetag: 21.06.2006
(51) Int. Cl.: A47J 43/07, B65D 53/02

(54) **KÜCHENMASCHINE MIT EINEM RÜHRGEFÄß**
FOOD PROCESSOR COMPRISING A MIXER BOWL
ROBOT MENAGER COMPORTANT UN RECIPIENT MELANGEUR

(30) Priorität: 22.06.2005 DE 102005028758
(43) Veröffentlichungstag der Anmeldung: 26.03.2008
(60) Teilanmeldung: 09154294.4
(73) Patentinhaber: Vorwerk & Co. Interholding GmbH, 42275 Wuppertal (DE)
(72) Erfinder: KEMKER, Uwe, 42105 Wuppertal (DE); BRECH, Oliver, 44339 Dormund (DE); DELSEITH, Petra, 42855 Remscheid (DE)
(74) Vertreter: Müller, Enno
(86) Internationale Anmeldenummer: PCT/EP2006/063408
(87) Internationale Veröffentlichungsnummer: WO 2006/136581

(56) Entgegenhaltungen:
- DE-A1- 10 210 442
- DE-A1- 19 646 327
- DE-U1-4202004 011 39
- FR-A1- 2 769 197
- GB-A- 2 116 154
- US-A- 2 720 329
- US-B1- 6 340 124

## Beschreibung

Die Erfindung betrifft zunächst eine Küchenmaschine mit einem Rührgefäß nach den Merkmalen des Oberbegriffes des Anspruches 1.

Küchenmaschinen der in Rede stehenden Art sind bekannt. Diese weisen in der Regel ein von der Küchenmaschine abnehmbares Rührgefäß auf, in welchem ein Rührwerk angeordnet ist. Des Weiteren sind Küchenmaschinen bekannt, bei welchen das Rührgefäß zusätzlich oder alternativ beheizbar ist, so beispielsweise aus der DE 10210 442 A1. Deren Rührgefäß ist in eine Rührgefäßaufnahme der Maschine einsetzbar, wobei der dem Rührgefäß zuzuordnende Deckel bajonettartig mit geräteseitigen Verriegelungselementen zusammenwirkt. Zwischen Deckel und zugeordnetem Rührgefäßrand ist eine Dichtung angeordnet. Um hierbei eine Relativbewegung zwischen dem Topfrand und der Deckel-/Dichtungskombination zu vermeiden, sind Lösungen bekannt, bei welchen die Dichtung an einem relativ zu dem Deckel um die gemeinsame Gefäßachse drehbaren Gleitteil aufgenommen ist. Der Deckel kann so ohne Einwirkung auf die Dichtung zur Erlangung der Verriegelungsstellung verdreht werden.

Aus der DE 10210 442 A1 ist eine Küchenmaschine, wie sie hier grundsätzlich betroffen ist, bekannt. Die GB-A-2 116 154 zeigt eine im Deckel fest angeordnete Dichtung.

Die Erfindung beschäftigt sich mit der Aufgabe, einen insbesondere hinsichtlich der Dichtung günstig gestalteten Deckel eines Rührgefäßes einer Küchenmaschine anzugeben.

Diese Aufgabe ist beim Gegenstand des Anspruches 1 gelöst, wobei darauf abgestellt ist, dass der Deckel von der Dichtung entkoppelt ist und dass die Deckel-Gleitteilkammer auf den Dichtbereich beschränkt ist derart, dass eine radial innere Wandung sich im Projektionsbereich der Rührgefäßwandung befindet. Der radiale Erstreckungsbereich der Deckel-Gleitteilkammer ist auf ein sich an der radialen

Breite der Dichtung orientiertes Minimalmaß beschränkt demzufolge auch der sich zwischen der Deckel-Gleitteilkammer und dem Rührgefäßdeckel bildende Spalt oder Zwischenraum klein gehalten ist. Insbesondere dieser Zwischen raum zwischen Deckel-Gleitteilkammer und Rührgefäßdeckel neigt im Zuge der Nutzung des Rührgefäßes in der Küchenmaschine zur Verschmutzung. Entsprechend ist erfindungsgemäß der zur Verschmutzung neigende Raum in optimaler Weise verkleinert. Auch ist durch die gewählte Ausgestaltung eine vereinfachte Montage und Demontage der Dichtung und des Gleitteils erdreichbar. Durch die radiale Begrenzung der Gleitteilkammer und darüber hinaus in Abhängigkeit davon auch des Gleitteiles ist weiter eine Gewichtreduzierung gegenüber Deckellösungen erreicht, bei welchen die Deckel-Gleitteilkammer über den Projektionsbereich auf die umlaufende Dichtung nach radial innen hinaus sich erstreckt, bis in einen zentralen, in Projektion zu einem Gefäßboden liegenden Bereich.

Bei einer Küchenmaschine der in Rede stehenden Art, bei welcher weiter der Deckel einen Verschlussring aufweist; zur Zusammenwirkung mit den Verschilussmitteln und der Verschlussring relativ zu dem Deckel verdrehbar ist kann vorgesehen beim, dass der Verschlussring unabhängig von der Drehstellung relativ zum Deckel einen nach radial außen sich erstreckenden Verriegelungskragen aufweist. Durch die hierdurch ermöglichte Relativverlagerung zwischen Verschlussring und Deckel ist die Belastung der zwischen dem Deckel und dem Topfrand liegenden Dichtung in Verschlussdrehrichtung wirksam reduziert, wodurch sich auch die Bedienkräfte für den Nutzer minimieren. Der radial sich nach außen erstreckende Verriegelungskragen des Verschlussringes wirkt mit den Verriegelungselementen der das Rührgefäß aufnehmenden Küchenmaschine zusammen, etwa in Art eines Bajonettverschlusses. Über die Zusammenwirkung von deckelseitigem bzw. verschlussringseitigem Verriegelungskragen und maschinenseitigen Verriegelungselementen ist das Rührgefäß zwischen Rührgefäßdeckel und dem Aufstellboden in der Küchenmaschine gesichert. Es erfolgt hierbei bevorzugt keine direkte Verriegelung zwischen Deckel bzw. deckelseitigen Elementen und Rührgefäß.

Es erweist sich weiter als vorteilhaft, dass die aus einem Weichmaterial bestehende Dichtung von dem aus Hartkunststoff bestehenden Gleitteil umspritzt ist Zufolge dieser Ausgestaltung ist ein Zweikomponenten-Dichtelement geschaffen, welches mit dem aus Hartkunststoff bestehenden Abschnitt in dem Deckel bzw. Verschlussring, das heißt in der Deckel-Gleitteilkammer gleitet, während der weichere Abschnitt gegen den Rührgefäßrand dichtet. Die Dichtung ist zudem durch den härteren Abschnitt nicht in sich verdrehbar. Hierdurch wird auch eine falsche Montage der Dichtung bzw. des so geschaffenen Dichtelements vermieden. Grundsätzlich ist hierdurch auch die Montage und Demontage der Dichtung bzw. des geschaffenen Dichtelements in dem Deckel wesentlich erleichtert. Das Gleitteil ist zudem in einer bevorzugten Ausgestaltung in dem Deckel bzw. in der Deckel-Gleitteilkammer hinsichtlich einer Hinderung einer Radialbewegung formschlüssig aufgenommen. Es ist somit eine eindeutige, insbesondere radiale Zuordnung von Gleitteil, gegebenenfalls mit an diesem gehalterter Dichtung, und Deckel geschaffen, wobei weiter die formschlüssige Halterung durchaus aufhebbar ist, so beispielsweise zum Zwecke der Reinigung des Gleitteils und/oder der Dichtung. So kann die Dichtung mittels des Gleitteiles über Verklippsung an dem Deckel gehaltert sein, wozu der Deckel entsprechende, das Gleitteil fassende Klippselemente aufweist. Alternativ können solche Klippselemente auch an dem Gleitteil angeformt sein, zur Zusammenwirkung mit entsprechenden Gegenrastmitteln an dem Deckel. Weiter alternativ kann auch das Gleitteil mittels der Dichtung an dem Deckel formschlussgehaltert sein, wozu beispielsweise der Deckel Mittel zur Halterung der Dichtung aufweist. In einer weiteren alternativen Ausgestaltung ist vorgesehen, dass der Deckel zugleich das Gleitteil ausbildet, so insbesondere bei einer Ausgestaltung in Zusammenwirkung mit einem relativ zu dem Deckel bzw. dem Gleitteil drehverlagerbaren Verschlussring. So kann diesbezüglich der Verschlussring außen auf dem das Gleitteil bildenden Deckel aufsitzen. Bei allen vorgeschlagenen Lösungen kann der Deckel mit Bezug auf das Rührgefäß in axialer Richtung auf dieses aufgesetzt bzw. von diesem abgehoben werden, was die Gefahr eines unkontrollierten Abtropfens von Mix- oder Gargut vom Deckel über den Rührgefäßrand hinaus minimiert. Bei einer vorgeschlagenen Deckel-/Verschlussringlösung können diese beiden Bauteile zudem auch aus unterschiedlichen Werkstoffen hergestellt sein, so beispielsweise aus einem Mix aus Kunststoff und Metall. Darüber hinaus sind auch zwei unterschiedliche Kunststoffe einsetzbar, wobei stets die reibungsarme Relativverlagerbarkeit zwischen Verschlussring und dem bevorzugt das Hartteil ausbildenden Deckel gegeben ist.

Die Erfindung ist nachstehend anhand der beigefügten Zeichnung, welche lediglich verschiedene Ausführungsbeispiele darstellt, näher erläutert. Es zeigt:
- Fig. 1: eine Küchenmaschine der in Rede stehenden Art in perspektivi- scher Darstellung bei in der Küchenmaschine gehaltertem Rührge- faß;
- Fig. 2: einen Querschnitt durch einen deckelseitigen Randbereich des Rührgefäßes, eine erste Ausführungsform betreffend;
- Fig. 3: eine der Fig. 2 entsprechende Querschnittdarstellung, jedoch eine zweite Ausführungsform betreffend und
- Fig. 4: in einer dritten Ausführungsform eine Querschnittdarstellung gemäß Fig. 2.

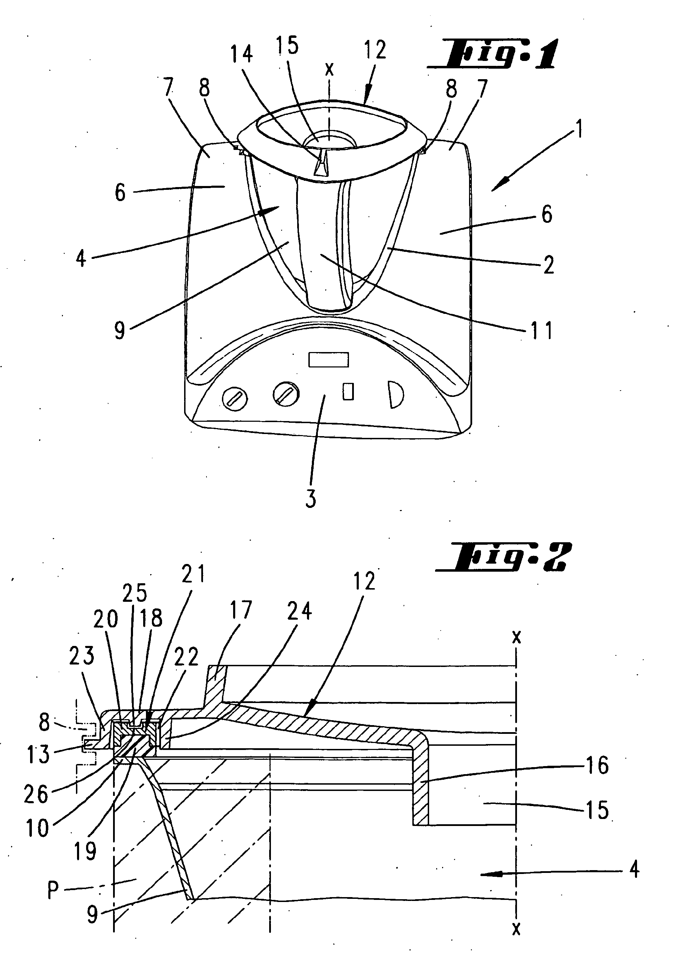

Dargestellt und beschrieben ist zunächst mit Bezug zu Figur 1 eine Küchenmaschine 1 mit einer Rührgefäß-Aufnahme 2 und einem Bedienfeld 3.

Der Küchenmaschine 1 ist ein Rührgefäß 4 zuordbar, indem dieses in die Rührgefäß-Aufnahme 2 eingesetzt wird. In dem Rührgefäß 4 ist in dem Rührgefäßboden zugeordnet ein nicht dargestelltes Rührwerk vorgesehen, welches über einen in der Küchenmaschine 1 unterhalb der Aufnahme 2 angeordneten, gleichfalls nicht dargestellten Elektroantrieb betrieben wird.

Die Rührgefäß-Aufnahme 2 ist im wesentlichen gebildet aus zwei gegenüberliegend angeordneten, turmartigen Backen 6. Im Bereich der Schultern 7 der Backen 6 sind Verriegelungselemente 8 in Form von horizontalen Nuten vorgesehen.

Das Rührgefäß 4 ist topfartig mit kreisrundem Querschnitt ausgebildet, bei sich zur Topföffnung das heißt nach oben hin konisch erweiterndem Querschnitt. Die Topfwandung 9 besteht aus einem Metallwerkstoff.

Öffnungsseitig des Rührgefäßes 4 geht die Topfwandung 9 über in einen radial nach außen weisenden, kragenartigen Topfrand 10.

Weiter besitzt das Rührgefäß 4 einen senkrecht ausgerichteten Haltegriff 11, welcher sockelseitig sowie topfrandseitig an dem Rührgefäß 4 festgelegt ist.

Die zentrale, im eingesetzten Zustand senkrecht verlaufende Rührgefäßachse ist mit x bezeichnet. Um diese Achse x dreht auch das im Sockelbereich des Rührgefäßes 4 angeordnete, nicht dargestellte Rührwerk.

Das Rührgefäß 4 wird der Küchenmaschinen 1 derart zugeordnet, dass der Haltegriff 11 sich freistehend zwischen den Backen 6, dem Bedienfeld 3 zugesandt erstreckt, wobei der Sockelbereich des Rührgefäßes 4 sich auf einem integralen Boden der Küchenmaschine 1 abstützt, dies unter Kupplung von Rührwerksantrieb und Rührwerk.

Auf das Rührgefäß 4 wird ein Deckel 12 aufgesetzt, mittels welchem durch Verdrehen desselben bevorzugt im Uhrzeigersinn eine Verriegelung durchgeführt wird. Der Deckel 12 weist hierzu außenrandseitig gegenüberliegend angeordnete, radial abragende Verriegelungskragen 13 auf, welche bei einer Verdrehung des Deckels 12 in die nutartigen Verriegelungselemente 8 der Rührgefäß-Aufnahme 2 eintauchen. Zur verbesserten Drehhandhabung des Deckels 12 besitzt dieser eine bevorzugt daumenbetätigbare, stegartige Handhabe 14.

Zentral besitzt der Deckel 12 eine konzentrisch zur Achse x ausgerichtete Einfüllöffnung 15, welche umfasst ist von einer hohlzylinderförmigen, unterseitig aus dem Deckel 13 herauswachsenden Wandung 16. Ausgehend von dem deckelseitigen Einfüllöffnungsrand erstreckt sich der Deckel 12 zunächst in einem spitzen Winkel leicht ansteigend, um in einem Randbereich in eine Horizontalausrichtung überzugehen. Im Übergangsbereich zwischen Horizontalabschnitt und leicht ansteigendem Abschnitt des Deckels 12 ist oberseitig, das heißt dem Rührgefäß 4 abgewandt ein umlaufender Vertikalkragen 17 angeformt.

Zwischen dem Horizontalabschnitt 18 des Deckels 12 und dem Topfrand 10 des Rührgefäßes 4 ist eine aus einem Weichmaterial, wie beispielsweise Gummi bestehende Dichtung 19 vorgesehen. Diese liegt mit ihrer dem Rührgefäß 4 zugewandten Unterseite in der Deckelverschlussstellung, insbesondere in der Deckelverriegelungsstellung, in welcher die Verriegelungskragen 13 in die maschinenseitigen Verriegelungselemente 8 eingreifen, dichtend auf.

Um bei der für die Verriegelung des Deckels 12 und somit auch zur Festlegung des Rührgefäßes 4 in der Küchenmaschine 1 notwendigen Drehverlagerung des Deckels 12 um die Achse x eine Relativbewegung der Dichtung 19 auf dem Topfrand 10 in Drehrichtung zu vermeiden, ist ein Gleitteil 20 vorgesehen, welches zwischen der Dichtung 19 und dem die Verriegelungskragen 13 aufweisenden, drehzuverlagernden Teil positioniert ist. Dieses Gleitteil 20 besteht aus einem Hartkunststoff.

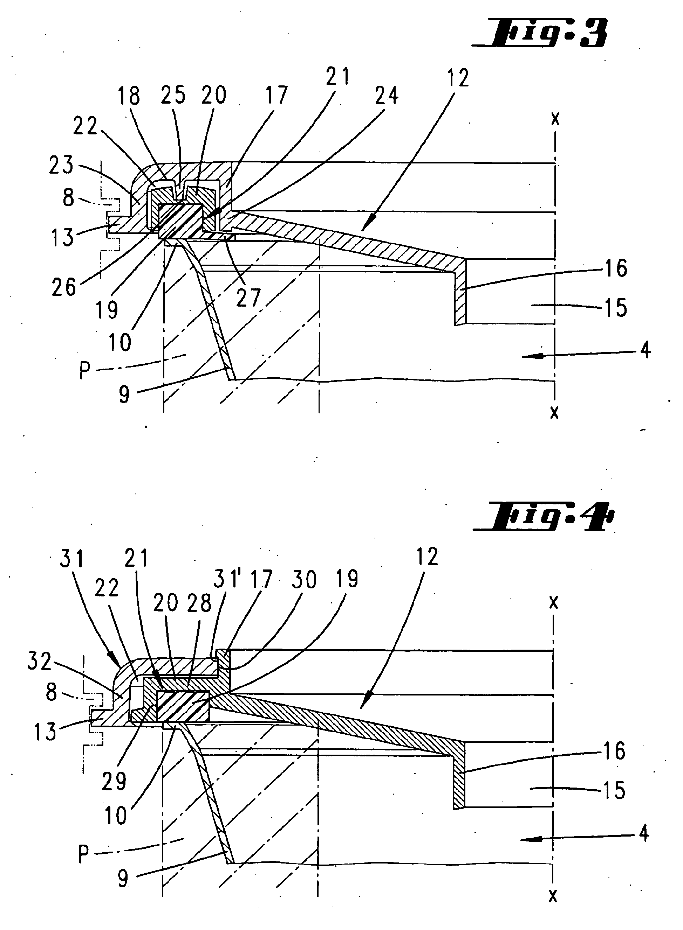

In den in den Figuren 2 und 3 dargestellten Ausführungsbeispielen ist die Dichtung 19 unter Freilassung der mit dem Topfrand 10 zusammenwirkenden Dichtfläche von dem Hartkunststoff zur Bildung des Gleitteils 20 umspritzt. Dieses so geschaffene Zweikomponenten-Dichtelement 21 ist unterseitig des Deckels 12 im Bereich des Horizontalabschnittes 18 in einer Deckel-Gleitteilkammer 22 aufgenommen. Diese ist radial außen begrenzt durch einen von dem Horizontalabschnitt 18 des Deckels 12 unterseitig abragenden, konzentrisch zur Achse x ausgerichteten Wandungsabschnitt 23, an dessen nach unten weisenden freien Randkante an zwei diametral gegenüberliegenden Positionen die radial auswärts abragenden Verriegelungskragen 13 angeformt sind.

Die radial innere Begrenzung der Gleitteilkammer 22 ist durch einen weiteren konzentrisch zur Achse x ausgerichtete, unterseitig des Horizontalabschnittes 18 abragenden Wandungsabschnitt 24 gebildet. Dieser ist im wesentlichen parallel ausgerichtet zu dem Wandungsabschnitt 23. Es ergibt sich hieraus entsprechend eine im Querschnitt etwa rechteckförmige Gleitteilkammer 22.

In diese Gleitteilkammer 22 ist das Zweikomponenten-Dichtelement 21 gehaltert, so beispielsweise lösbar rastgehaltert. Entsprechend ist das Dichtelement 21 zu Reinigungszwecken in einfachster Weise aus der Gleitteilkammer 22 entnehmbar.

Der Deckel 12 stützt sich im Bereich der Gleitteilkammer 22 insbesondere über einen unterseitig von dem Horizontalabschnitt 18 in die Gleitteilkammer 22 hineinragenden Steg 25 auf dem Gleitteil 20 ab, wozu letzteres in entsprechender Positionierung eine angepasste Nut 26 aufweist, in welche der Steg 25 eingreift. Zufolge dieser Ausgestaltung ist eine punkt- bzw. über den Umfang betrachtet linienartige Abstützung des Deckels 12 auf dem grundrissmäßig ringförmigen Gleitteil 20 gegeben.

Die Gleitteilkammer 22 ist in ihrer radialen Erstreckung im wesentlichen begrenzt und angepasst an die in selber Richtung gemessene Stärke der Dichtung 19 bzw. des Gleitteils 20. Entsprechend befindet sich die innere Wandung 24 der Gleitteilkammer 22 im Projektionsbereich P der Rührgefäßwandung 9. Entsprechend ist der Spalt zwischen Gleitteil 20 und Gleitteilkammer 22, welcher im Zuge der Nutzung des Rührgefäßes 4 in der Küchenmaschine 1 durchaus verschmutzt sein kann, sehr gering gehalten.

Um einer Verschmutzung dieses Spaltes zwischen Gleitteil 20 und Gleitteilkammer 22 entgegenzuwirken, kann gemäß der Ausführungsform in Figur 3 die Dichtung 19 unterseitig, das heißt auf der mit dem Topfrand 10 zusammenwirkenden Unterseite einen nach radial innen etwa in Horizontalrichtung einragenden Dichtlappen 27 aufweisen. Durch diese Weichkomponenten-Geometrie ist eine selbstverstärkende Dichtkraft ermöglicht. Gegebenenfalls am Topfrand 10 auftreibendes Mix- oder Gargut drückt den Dichtlappen 27 selbsttätig gegen die durch den radial inneren Wandungsabschnitt 24 gebildete Deckeldichtkante, zufolge dessen das Mix- oder Gargut nicht in den Zwischenraum zwischen Gleitteil 20 und Gleitteilkammer 22 gelangen kann.

Alternativ zur Umspritzung der Dichtung 19 mit dem Hartkunststoff zur Bildung des Gleitteiles 20 kann die Dichtung 19 auch kraft- oder formschlüssig in dem Gleitteil 20 reversibel eingelegt sein.

Eine weitere alternative Ausgestaltung zeigt die Schnittdarstellung in Figur 4. Hier formt das aus einem Hartkunststoff gebildete Gleitteil 20 zugleich den Deckel 12 aus, welcher in diesem Ausführungsbeispiel gleich dem Gleitteil 20 der ersten oder zweiten Ausführungsform (Figuren 2 und 3) im Zuge der Verriegelungsbewegung nicht relativ zu dem Rührgefäß 4, insbesondere zum Topfrand 10 drehbeweglich ist.

Dieser als Gleitteil 20 ausgebildete Deckel 12 formt unterseitig eines dem Topfrand 10 zugeordneten Horizontalabschnittes 28 eine formschlüssige Aufnahme 29 für die Dichtung 19 aus. Auch hier kann alternativ das Hartkunststoffmaterial zur Bildung des gleitteilartigen Deckels 12 um das Dichtungsmaterial umspritzt sein.

Radial nach innen versetzt zu der Aufnahme 29, jedoch noch im Projektionsbereich zu der Topfwandung 9 - bei aufgesetztem Deckel - ragt von dem deckelseitigen Horizontalabschnitt 28 ein Vertikalkragen 17 ab.

In einer wandungsaußenseitig des Vertikalkragens 17 ausgebildeten, umlaufenden Nut 30 liegt die radial innere Randkante eines an dem Deckel 12 bzw. dem Gleitteil 20 gehalterten Verschlussringes 31 ein. Dieser Verriegelungsring 31 erstreckt sich von dem deckelseitigen Vertikalkragen 17 ausgehend in horizontaler Richtung nach radial außen, um abschließend in einen das Gleitteil 20 bzw. dessen äußeren Wandungsabschnitt 23 überfangenden Ringkragen 32 überzugehen. Letzterer weist nach radial innen ragende Rastmittel auf, zur radialen und axialen Festlegung des Verriegelungsringes 31 an dem Deckel 12 unter Tolerierung einer Relativdrehverlagerung des Verriegelungsringes 31 zum Deckel 12.

Im Bereich des nach unten weisenden freien Randes ist an dem Ringkragen 32 in diametral gegenüberliegenden Abschnitten jeweils ein radial nach außen abragender Verriegelungskragen 13 angeformt, zur jeweiligen Zusammenwirkung mit einem Verriegelungselement 8 der Küchenmaschine 1.

In dieser Ausführungsform bildet der Ringkragen 32 des Verriegelungsringes 31 mit dem Horizontalabschnitt des Verriegelungsringes 31 die nach unten hin offene Gleitteilkammer 22 aus, wobei auch hier die Gleitteilkammer 22 im wesentlichen auf den Dichtbereich beschränkt ist. Die radial innere Randkante 31' des Verriegelungsringes 31, die im übertragenen Sinne die innere Begrenzung der Deckel-Gleitteilkammer 22 ausformt, befindet sich im Projektionsbereich P der Topfwandung 9.

Der auf dem Rührgefäß 4 aufgesetzte Deckel 12 wird in dieser Ausführungsform durch Drehverlagerung des Verriegelungsringes 31 festgelegt, wobei dieser auf der ebenen zugewandten Oberfläche des Horizontalabschnittes 38 des Gleitteiles 20 reibungsarm gleitet

Alle drei Ausfüluungsformen zeigen eine Zweikomponenbendichtung bestehend aus einer harten Gleitkomponente in Form des Gleitteiles 20 und einer weichen Dichtkomponente in Form der Dichtung 19. Die Festlegung des Rührgefäßes 4 über den Deckel 12 in der Küchenmaschine 1 erfolgt durch Drehverlagerung eines weiteren, von der Dichtung 19 entkoppelten und lediglich mit der harten Gleitkomponente zusammenwirkenden Deckels 12 bzw. Verriegelungsrings 31.

## Patentansprüche

1. Küchenmaschine (1) mit einem Rührgefäß (4), wobei das Rührgefäß (4) in der Küchenmaschine (1) unter Verriegelung gehaltert ist, wozu Verriegelungselemente (8) mit einem Rand eines auf dem Rührgefäß (4) aufsitzenden Deckels (12) zusammenwirken, wobei weiter zwischen Deckel (12) und Rührgefäß (4) eine Dichtung (19) gehaltert ist und der Deckel (12) mittels eines überfangenen und in einer Deckel-Gleitteilkammer (22) aufgenommenen Gleitteils (20) auf der Dichtung (19) aufliegt, **dadurch gekennzeichnet, dass** der Deckel (12) von der Dichtung (19) entkoppelt ist und dass die Deckel-Gleitteilkammer (22) auf den Dichtbereich beschränkt ist derart, dass eine radial innere Wandung (24) sich im Projektionsbereich (P) der Rührgefäßwandung (9) befindet.

2. Küchenmaschine nach Anspruch 1, wobei weiter der Deckel (12) einen Verschlussring (31) aufweist, zur Zusammenwirkung mit den Verschlussmitteln und der Verschlussring (31) relativ zu dem Deckel (12) verdrehbar ist, **dadurch gekennzeichnet, dass** der Verschlussring (31) unabhängig von der Drehstellung relativ zum Deckel (12) einen nach radial außen sich erstreckenden Verriegelungskragen (13) aufweist.

3. Küchenmaschine nach einem der vorhergehenden Ansprüche, **dadurch gekennzeichnet, dass** die aus einem Weichmaterial bestehende Dichtung (19) von dem aus Hartkunststoff bestehenden Gleitteil (20) umspritzt ist.

4. Küchenmaschine nach einem der vorhergehenden Ansprüche, **dadurch gekennzeichnet, dass** das Gleitteil (20) an dem Deckel (12) hinsichtlich einer Hinderung einer Radialbewegung formschlüssig aufgenommen ist.

5. Küchenmaschine nach einem der vorhergehenden Ansprüche, **dadurch gekennzeichnet, dass** die Dichtung (19) mittels des Gleitteils (20) über Verklippsung an dem Deckel (12) gehaltert ist.

6. Küchenmaschine nach einem der Ansprüche 1 bis 4; **dadurch gekennzeichnet, dass** das Gleitteil (20) mittels der Dichtung (19) an dem Deckel (12) formschlussgehaltert ist.

7. Küchenmaschine nach einem der Ansprüche 1 bis 3, **dadurch gekennzeichnet, dass** der Deckel (12) zugleich das Gleitteil (20) ausbildet.

8. Küchenmaschine nach Anspruch 7, **dadurch gekennzeichnet, dass** der Verschlussring (31) außen auf dem das Gleitteil (20) bildenden Deckel (12) aufsitzt.

## Claims

1. Food processor (1) having a mixing vessel (4), the mixing vessel (4) being retained in the food processor (1) by locking action, for which purpose locking elements (8) interact with a periphery of a lid (12) seated on the mixing vessel (4), furthermore, a seal (19) being retained between the lid (12) and mixing vessel (4) and the lid (12) resting on the seal (19) by means of an over-engaging sliding part (20) accommodated in a lid/sliding-part chamber (22), **characterized in that** the lid (12) is separate from the seal (19), and **in that** the lid/sliding-part chamber (22) is limited to the sealing region such that a radially inner wall (24) is located in the region of projection (P) of the mixing-vessel wall (9).

2. Food processor according to Claim 1, the lid (12) furthermore having a closure ring (31), for interacting with the closure means, and the closure ring (31) being rotatable relative to the lid (12), **characterized in that**, irrespective of the rotary position relative to the lid (12), the closure ring (31) has a radially outwardly extending locking collar (13).

3. Food processor according to any of the preceding claims, **characterized in that** the seal (19), which consists of a soft material, is encapsulated by the sliding part (20), which consists of hard plastics material.

4. Food processor according to any of the preceding claims, **characterized in that**, in respect of preventing radial movement, the sliding part (20) is accommodated in a positive manner on the lid (12).

5. Food processor according to any of the preceding claims, **characterized in that** the seal (19) is retained on the lid (12) by means of the sliding part (20) by way of clipping action.

6. Food processor according to any of Claims 1 to 4, **characterized in that** the sliding part (20) is positively retained on the lid (12) by means of the seal (19).

7. Food processor according to any of Claims 1 to 3, **characterized in that** the lid (12), at the same time, forms the sliding part (20).

8. Food processor according to Claim 7, **characterized in that** the closure ring (31) is seated on the outside of the lid (12), which forms the sliding part (20).

## Revendications

1. Appareil ménager (1) comportant un récipient mélangeur (4), dans lequel le récipient mélangeur (4) est maintenu dans l'appareil ménager (1), de manière bloquée, des éléments de blocage (8) coopérant pour ce faire avec un bord d'un couvercle (12) mis en place sur le récipient mélangeur (4), et dans lequel, en outre, une garniture d'étanchéité (19) est maintenue entre le couvercle (12) et le récipient mélangeur (4), et le couvercle (12) repose sur la garniture d'étanchéité (19) au moyen d'un élément de glissement (20) doublé et reçu à l'intérieur d'une chambre de couvercle-élément de glissement, **caractérisé en ce que** le couvercle (12) est découplé par rapport à la garniture d'étanchéité (19) et **en ce que** la chambre de couvercle-élément de glissement (22) est limitée à la zone d'étanchéité, de manière qu'une paroi (24) radialement interne se trouve dans la zone de projection (P) de la paroi du récipient mélangeur (9).

2. Appareil ménager selon la revendication 1, dans lequel, en outre, le couvercle (12) présente un anneau de fermeture (31) destiné à coopérer avec les moyens de fermeture, l'anneau de fermeture (31) étant susceptible de tourner par rapport au couvercle (12), **caractérisé en ce que** l'anneau de fermeture (31) présente, indépendamment de la position de rotation par rapport au couvercle (12), une couronne de verrouillage (13) qui s'étend radialement vers l'extérieur.

3. Appareil ménager selon l'une des revendications précédentes, **caractérisé en ce que** l'élément de glissement (20) réalisé en un matériau synthétique dur est surmoulé sur la garniture d'étanchéité composé d'un matériau mou (19).

4. Appareil ménager selon l'une des revendications précédentes, **caractérisé en ce que** l'élément de glissement (20) est reçu sur le couvercle (12) par correspondance de forme concernant un empêchement d'un déplacement radial.

5. Appareil ménager selon l'une des revendications précédentes, **caractérisé en ce que** la garniture d'étanchéité (19) est maintenue au moyen de l'élément de glissement (20) par clipsage sur le couvercle (12).

6. Appareil ménager selon l'une des revendications 1 à 4, **caractérisé en ce que** l'élément de glissement (20) est maintenu au moyen de la garniture d'étanchéité (19) sur le couvercle (12) par correspondance de forme.

7. Appareil ménager selon l'une des revendications 1 à 3, **caractérisé en ce que** le couvercle (12) forme en même temps l'élément de glissement (20).

8. Appareil ménager selon la revendication 7, **caractérisé en ce que** l'anneau de fermeture (31) s'appuie à l'extérieur sur le couvercle (42) formant l'élément de glissement (20).
